# EUROPÄISCHE PATENTSCHRIFT

(11) **EP 1 080 526 B1**
(45) Veröffentlichungstag und Bekanntmachung des Hinweises auf die Patenterteilung: **21.06.2006**
(21) Anmeldenummer: 99970556.9
(22) Anmeldetag: 23.09.1999
(51) Int. Cl.: H02K 1/14, H02K 21/22, H02K 29/03

(54) **MOTOR MIT EINEM ELEKTRISCH KOMMUTIERTEN STATOR UND EINEM ROTOR MIT DAUERMAGNETEN**
MOTOR WITH AN ELECTRICALLY COMMUTATED STATOR AND A ROTOR WITH PERMANENT MAGNETS
MOTEUR AVEC DES ENROULEMENTS DU STATOR A COMMUNICATION ELECTRONIQUE ET UN ROTOR A AIMANTS PERMANENTS

(30) Priorität: 11.12.1998 DE 19857180
(43) Veröffentlichungstag der Anmeldung: 07.03.2001
(73) Patentinhaber: ROBERT BOSCH GMBH, 70442 Stuttgart (DE)
(72) Erfinder: BERNAUER, Christof, D-76596 Forbach (DE); HENSCHEL, Matthias, D-77836 Rheinmünster (DE)
(86) Internationale Anmeldenummer: PCT/DE1999/003049
(87) Internationale Veröffentlichungsnummer: WO 2000/036727

(56) Entgegenhaltungen:
- EP-A- 0 375 228
- US-A- 4 216 400
- US-A- 4 424 463
- US-A- 4 769 567

## Beschreibung

### Stand der Technik

Die Erfindung betrifft einen Motor mit einem Stator mit anderen Magnetpolen und einem Rotor mit darauf abgestimmten Anzahl von Dauermagnet-Polen, bei dem die Luftspaltflächen im Bereich zwischen Stator und Rotor zur Reduzierung des Rastmomentes mit Feinverzahnungen versehen sind.

Ein ähnlicher Motor ist aus der US 3 604 961 bekannt. Dabei trägt der als Innenrotor ausgebildete, elektrisch erregte Rotor umfangsseitig eine gleichförmige mäanderförmige Feinverzahnung, so daß er in dieser Richtung symmetrisch ausgelegt ist. Die Pole des Stators werden aus Dauermagneten gebildet, die jedoch in Umfangsrichtung nicht gleichmäßig angeordnet sind, da sie abwechselnd einen Winkel kleiner und größer als 360°/η einnehmen, wobei η die Anzahl der Pole kennzeichnet. Der abweichende Winkelbetrag ist nun so gewählt, dass sich in Umfangsrichtung zwischen Rotor und Stator eine gleichmäßigere Magnetfeldverteilung ergibt. Dies führt zur Reduzierung des Rastmomentes zwischen Rotor und Stator. Ohne diesen Versatz der Dauermagnete würden durch die Polzahlen bedingt mehrere Raststellungen zwischen Rotor und Stator entstehen, die beim manuellen Durchdrehen des Rotors festgestellt werden könnten und die sich in einem unruhigen und geräuschbehafteten Lauf des Motors auswirken könnten.

Diese bekannte Reduzierung des Rastmomentes bedingt aber einen komplizierten Aufbau des Stators, bei dem es auf den exakten Einbau der Dauermagnete ankommt. Außerdem ist durch diesen Aufbau des Motors die Reduzierung des Rastmomentes mehr oder weniger begrenzt.

Aus EP 375 228 A ist ein elektronisch kommutierter Motor mit einem Rotor mit Permanentmagneten und einem Stator bekannt, dessen Zähne mit Kerben versehen sind. Die Kerben sind mit einem Winkel zur Rotationsachse des Rotors angeordnet.

In US 4 424 463 ist ein elektrischer Motor mit einem Rotor und einem Stator beschrieben, wobei der Stator aus einem scheibenförmigen Teil und einer Vielzahl von Zähnen besteht. Der Stator weist außerdem sechs gleichartige Abschnitte auf, wobei jeder Abschnitt einen Satz von fünf Zähnen besitzt und Windungen jeweils um die drei mittleren der fünf Zähne eines jeden Satzes vorgesehen sind.

Es ist Aufgabe der Erfindung, einen Motor mit Ausgleich des Rastmomentes zu schaffen, der im Aufbau einfach und betriebssicher ist und eine wesentlich verbesserte Möglichkeit der Reduzierung und der Kompensation des Rastmomentes bietet.

Diese Aufgabe wird durch einen Motor mit dem im Anspruch 1 aufgeführten Gesamtaufbau erreicht.

Die Verlagerung der Feinverzahnung in dem Bereich der Luftspaltflächen des Stators bringt einen symmetrisch ausgebildeten Dauermagnet-Rotor, der in der Herstellung einfach ist und in Umfangsrichtung definierte Magnetfeldverhältnisse bringt, die über die auf dem Stator angeordnete Feinverzahnung in vielfältiger Weise beeinflußt werden können. Dabei bleibt der Stator im wesentlichen symmetrisch auslegbar. Der Ausgleich des Rastmomentes bleibt auf die Auslegung der Feinverzahnung beschränkt, die durch einfaches Ausstanzen eines "Massivankers" mit der Bildung der Magnetpole hergestellt werden kann. Daher sind auch weitere Verbesserungen der Rastmomentkompensation auf einfache Weise in den Herstellungsablauf des Motors einzubeziehen, da nur der Stanzvorgang entsprechend abzuwandeln ist. Außerdem entfällt eine Stromzuführung über Schleifkontakte, da diese mittels einer einfachen elektronischen Steuerschaltung erfolgen kann.

Ein besonders einfacher Aufbau des Motors ergibt sich dadurch, dass die Anzahl der Magnetpole des Stators der Anzahl der Dauermagnet-Pole des Rotors entspricht, wobei insbesondere vorgesehen wird, daß der Stator als innenstator und der Rotor als Außenrotor ausgebildet sind.

Die wirkungsvolle Kompensation des Rastmoments ergibt sich nach einer Ausgestaltung dadurch, dass der Versatz der Feinverzahnungen der Polpaare identisch und vorzugsweise einer halben Teilung der Feinverzahnungen entspricht.

Für den Aufbau des Rotors kann nach einer Ausgestaltung vorgesehen sein, dass die Dauermagnet-Pole des Rotors durch gleichmäßig über den Umfang des Rotors verteilte Einzel-Dauermagnete gebildet sind, die in Umfangsrichtung abwechselnde Polarität aufweisen, wobei die Einzel-Dauermagnete auch einpolig aufmagnetisiert sein können.

Eine weitere Ausgestaltung für den Rotor kann in der Weise geschehen, dass die Dauermagnet-Pole des Rotors durch eine Anzahl von über den Umfang des Rotors gleichmäßig verteilten zweipoligen Ringsegment-Dauermagneten gebildet sind, die mit ihren Polen in Umfangsrichtung gleichsinnig angeordnet sind, wobei die Dauermagnet-Pole auch durch mehrpolige Ringsegment-Dauermagnete gebildet sein können.

Die Feinverzahnungen werden in bekannter Weise mäanderförmig ausgebildet, wobei im einfachsten Fall die Zähne und die Zahnlücken der Feinverzahnungen identische Breite und identische Tiefen aufweisen.

Eine weitergehende Kompensation der Rastmomente ergibt sich dadurch, dass die Zähne und die Zahnlücken der Feinverzahnungen unterschiedliche Breiten, jedoch identische Tiefen aufweisen, und sich in den Polpaaren ergänzen oder dass sich die Breite der Zähne des einen Poles und die Zahnlücken des anderen Poles der Polpaare der Feinverzahnungen zumindest in einem Teilumfangsbereich in gleicher Weise verändern. Die Anzahl der Zähne und Zahnlücken der Feinverzahnungen beträgt vorzugsweise ein ganzzahliges Vielfaches der Anzahl der gebildeten Polpaare.

Die Polpaarbildung und die Kompensation des Rastmomentes kann zum einen so ausgeführt sein, dass die Feinverzahnungen von Polpaaren des Stators, die aus jeweils benachbarten oder diametral angeordneten Magnetpolen gebildet sind, jeweils gegeneinander versetzt sind und zum anderen so, dass die Feinverzahnungen von Polpaaren des Stators, die aus jeweils um zwei Polteilungen versetzten Magnetpolen gebildet sind, jeweils gegeneinander versetzt sind. In beiden Fällen sind die Zähne der Feinverzahnungen der Polpaare umfangseitig gegenphasig versetzt. Bei feststehender oder umlaufender Exzentrizität des Rotors ist die Wirksamkeit der Kompensation jedoch eingeschränkt.

Bei höher poligen Motoren ist es günstiger, die Feinverzahnungen über eine doppelte Polleitung gegenphasig anzuordnen, wie die zweite Ausgestaltung zeigt.

Bei diesen Motoren hebt sich der Einfluß der Rotorexzentrizität auf.

Für die Wirksamkeit der Kompensation des Rastmomentes ist vorteilhafterweise vorzusehen, dass die Tiefe der Zähne und der Zahnlücken gleich oder größer ist als die Luftspaltweite zwischen dem Stator und dem Rotor.

Die Erfindung wird anhand von in den Zeichnungen dargestellten Ausführungsbeispielen näher erläutert. Es zeigen:
- Fig. 1 bis 4: in Stufen der Auslegung des Stators für einen vorgegebenen 8-poligen Dauermagnet-Rotor,
- Fig. 5: die Polpaarbildung aus diametral angeordneten Magnetpolen und
- Fig. 6: die Polpaarbildung aus um zwei Polleitungen versetzten Magnetpolen.

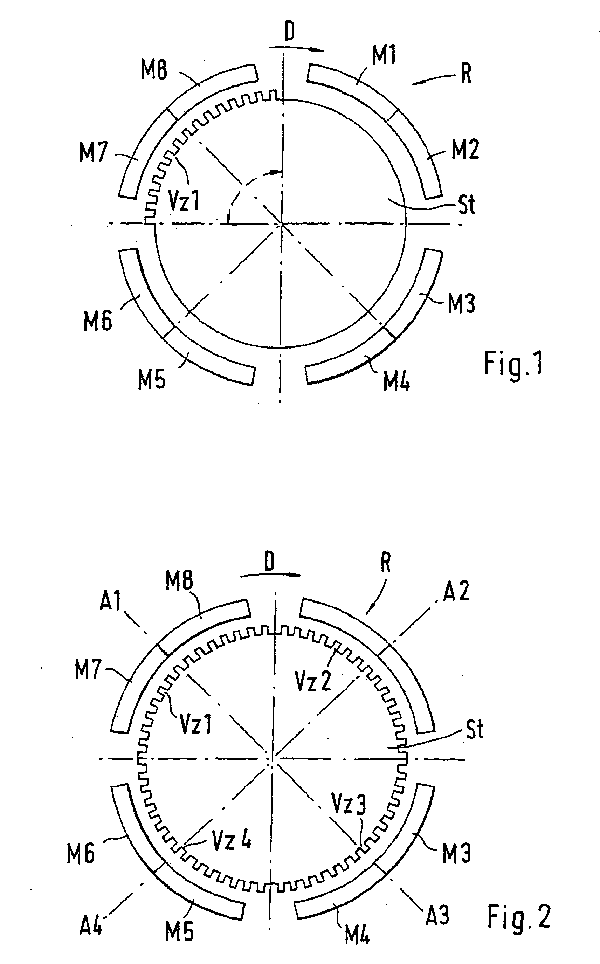

Anhand der Fig. 1 bis 4 wird die Ausgestaltung eines Motors mit jeweils acht Magnetpolen P1 bis P8 an dem elektrisch kommutierten Stator St und acht Dauermagnet-Polen M1 bis M8 am Rotor R erläutert, wobei in den Figuren jeweils eine Drehrichtung des als hülsenförmiger Außen-Rotor ausgebildeten Rotors R aufgenommen ist.

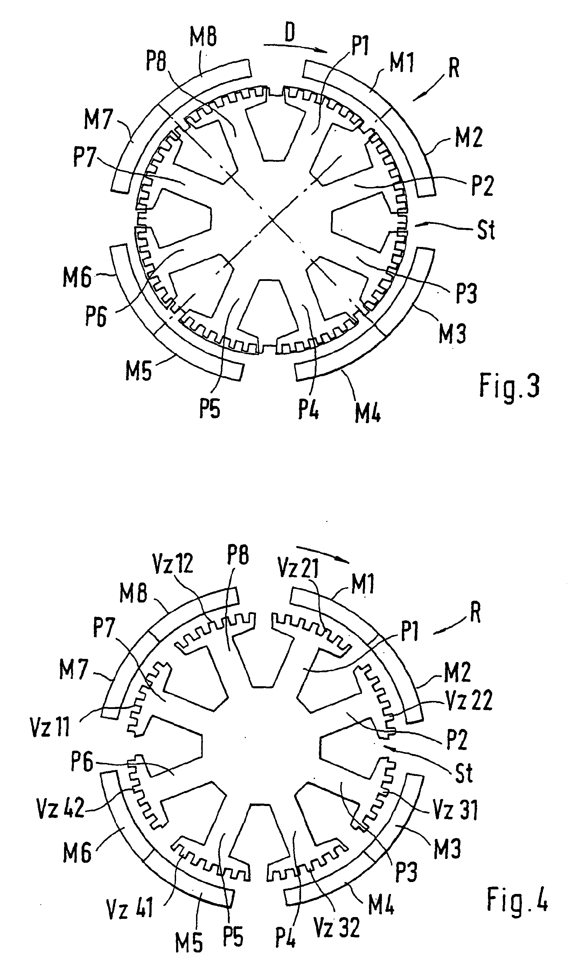

Bei diesem Motoraufbau werden über die Achsen A1 bis A4 vier 90°-Segmente gebildet, in denen jeweils zwei Dauermagnet-Pole M1 und M2, M3 und M4, M5 und M6 sowie M7 und M8 des Rotors R und jeweils zwei Magnetpole P1 und P2, P3 und P4, P5 und P6 sowie P7 und P8 unterzubringen sind, wie mit den Fig. 3 und 4 verdeutlicht ist. Da die Polpaarbildung sich über Polpaare des Stators St erstrecken soll, die jeweils um zwei Polteilungen versetzt sind, müssen erfindungsgemäß die Magnetpole P1 und P3, P2 und P4, P5 und P7 sowie P6 und P8 mit Feinverzahnungen versehen sein, die jeweils gegeneinander versetzt sind, um eine Kompensation der Rastmomente zu erreichen.

In den Fig. 1 bis 4 wird ein Ausführungsbeispiel gezeigt, bei dem sich die Feinverzahnungen stets über die gesamte Luftspaltfläche der Magnetpole P1 bis P8 erstrecken und mit identischer und gleichbleibender Zahnteilung ausgelegt sind. Dies bedeutet, dass die Breite der Zähne und der Zahnlücken der Feinverzahnungen gleich groß ist.

Um zu dem in Fig. 4 skizzierten Aufbau des Motors zu gelangen, wird z. B. das 90°-Segment, das den Dauermagnet-Polen M7 und M8 zugekehrt ist, mit einer Feinverzahnung Vz1 versehen, wie Fig. 1 zeigt, wobei die Vorderflanke eines Zahnes auf die Achse A1 ausgerichtet ist. Die Feinverzahnung Vz3, die den Dauermagnet-Polen M3 und M4 zugeordnet ist, wird entsprechend ausgelegt, wie die auf die Achse A3 ausgerichtete Vorderkante eines Zahnes zeigt.

Den 90°-Segmenten, die den Dauermagnet-Polen M1 und M2 bzw. M5 und M6 zugeordnet sind, tragen Feinverzahnungen Vz2 und Vz4, die um eine halbe Zahnteilung gegenüber den Achsen A2 und A4 versetzt sind. Haben die Zähne Z und die Zahnlücken ZL eine einheitliche Breite a, dann ist der Versatz gleich a, d.h. die Feinverzahnungen Vz2 und Vz4 sind mit einer Vorderflanke auf die Achsen A2 und A4 ausgerichtet, wie der Fig. 2 zu entnehmen ist. Der Versatz a tritt daher bei den Polpaaren P1 und P3, P2 und P4, P5 und P7 sowie P6 und P8 auf. Die Polbildung erfolgt daher über Magnetpole, die um zwei Polteilungen des Stators St versetzt sind. Dabei bilden sich an den Stoßstellen zwischen den 90°-Segmenten abwechselnd breitere Zähne und breitere Zahnlücken.

Wird der Massivstator entsprechend Fig. 3 ausgestanzt, dann entstehen die Magnetpole P1 bis P8 nach Fig. 4, wobei die Feinverzahnungen Vz1, Vz2, Vz3 und Vz4 jeweils in zwei identische (Teil-) Feinverzahnungen Vz11 und Vz12, Vz21 und Vz22, Vz31 und Vz32 sowie Vz41 und Vz42 aufgeteilt werden, wobei der Versatz a zwischen den Feinverzahnungen Vz1 1 und Vz21, Vz12 und Vz22, Vz31 und Vz41 sowie Vz32 und Vz42 beibehalten wird und über den gesamten Umfang zur Kompensation des Rastmomentes beitragen.

Im Ausführungsbeispiel werden die Dauermagnet-Pole M1 bis M8 durch zweipolige Ringsegment-Dauermagnete gebildet, die mit ihren neutralen Mittelachsen auf die Achsen A1 bis A4 ausgerichtet sind und in Umfangsrichtung mit ihren Polen gleichsinnig ausgerichtet sind, so dass in den Pollücken des Rotors R jeweils unterschiedliche Pole der Ringsegment-Dauermagnete aufeinanderstoßen. Der Rotoraufbau kann auch mit mehrpoligen (> 2) Ringsegment-Dauermagneten erfolgen.

Bei dem Ausführungsbeispiel weisen Stator St und Rotor R die gleiche Anzahl von η = 8 Polen auf. Die Anzahl der Pole kann auch kleiner oder größer sein, sie muß nur geradzahlig sein. Die Anzahl der Pole des Stators St kann sich auch von der Anzahl der Pole des Rotors R unterscheiden. Die Dauermagnet-Pole M1 bis M8 des Rotors R können auch durch einpolig aufmagnetisierte Einzel-Dauermagnete gebildet werden.

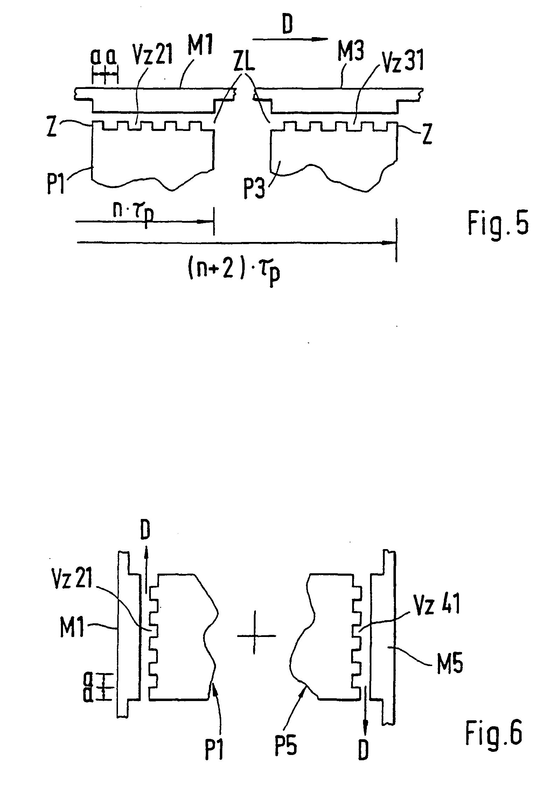

Anhand der Fig.5 wird für den Motor mit dem Aufbau nach Fig. 4 noch einmal der Versatz a zwischen den Feinverzahnungen Vz21 und Vz31 der Magnetpole P1 und P3 gezeigt, die in einer auf die Dauermagnet-Pole M1 und M3 bezogen dargestellt sind. Sind die Dauermagnet-Pole M1 und M3 als Einzel-Dauermagnete ausgebildet, dann sind eine Vorderflanke eines Zahnes Z der Feinverzahnung Vz31 auf die Endkante des Dauermagnet-Poles M3 und eine Vorderflanke einer Zahnlücke ZL der Feinverzahnung Vz21 auf die Endkante des Dauermagnet-Poles M1 ausgerichtet und die Feinverzahnungen Vz21 und Vz31 decken sich mit den Polbreiten der Magnetpole P1 und P3 sowie der Dauermagnet-Pole M1 und M3.

Die Magnetpole P1 und P3 sind in einem Abstand (n+2) τ angeordnet, wobei n = 1, oder 2 und τ die Polteilung ist.

Die Feinverzahnungen können sich jedoch auch nur über einen Teilumfangsbereich der Magnetpole P1 bis P8 erstrecken. Dabei sind die Teilumfangsbereiche der Polpaare in der Regel aufeinander abgestimmt, d.h. an den Magnetpolen der Polpaare gleich gewählt.

Die Zahnteilung mit einheitlich ausgebildeten Zähnen Z und Zahnlücken ist auch nicht zwingend erforderlich. Zur Erhöhung der Kompensationsmöglichkeiten können in den Feinverzahnungen der Polpaare nur ein Teil der Zähne und Zahnlücken gegeneinander versetzt sein. Außerdem kann die Breite der Zähne und der Zahnlücken in den Feinverzahnungen zumindest teilweise variieren. Dabei kann es von Vorteil sein, wenn sich die Zähne Z der Feinverzahnung des einen Magnetpoles mit den Zahnlücken ZL der Feinverzahnung des anderen Magnetpoles der Polpaare ergänzen. Daraus ist zu ersehen, dass zahlreiche Möglichkeiten zur Beeinflussung des Rastmomentes gegeben sind, die allein durch den in Fig. 3 angedeuteten Stanzvorgang des Stators St vornehmbar sind. Dabei bleibt der symmetrische Grundaufbau des Stators St im wesentlichen erhalten. Es ändert sich nur die Feinverzahnung an den Luftspaltflächen der Magnetpole P1 bis P8.

Wie Fig. 6 zeigt, kann die Polpaarbildung am Stator St auch mittels diametral angeordneter Polpaare vorgenommen werden, wie mit den Magnetpolen P1 und P5 dargestellt ist. Die Feinverzahnungen Vz21 und Vz41 sind dabei um die halbe Zahnteilung gegeneinander versetzt, wie deren Vorderflanken im Bezug auf die Auslaufkanten der Dauermagnet-Pole M1 und M5 erkennen lassen.

Die Polpaarbildung kann auch über benachbarte Magnetpole, d. h. um eine Polteilung versetzte Magnetpole, z. B. P1 und P2 bis P7 und P8, vorgenommen werden. Auch die Polpaarbildung ist allein durch den in Fig. 3 verdeutlichten Stanzvorgang des Stators St realisierbar. Die Anzahl der Zähne der Feinverzahnungen ist vorzugsweise größer als die Anzahl der Pole des Stators St und die Tiefe der Zähne Z und der Zahnlücken ZL in radialer Richtung ist gleich oder größer als die Luftspaltbreite.

Der Aufbau des Motors bleibt in jedem Fall einfach und ist leicht realisierbar. Für die Kompensation des Rastmomentes gibt es zahlreiche Möglichkeiten mit unterschiedlicher Wirkung. In jedem Fall wird ein gleichförmiger, geräuscharmer Lauf des Motors erreicht.

## Patentansprüche

1. Motor mit einem Stator (St) mit mehreren Magnetpolen (P1 bis P8) und einem Rotor (R) mit darauf abgestimmten Anzahl von Dauermagnet-Polen (M1 bis M8), bei dem die Luftspaltflächen im Bereich zwischen Stator (ST) und Rotor (R) zur Reduzierung des Rastmomentes mit Feinverzahnungen (Vz11, Vz12...Vz41, Vz42) versehen sind, wobei der Polaufbau von Stator (St) und Rotor (R) in Umfangsrichtung im wesentlichen symmetrisch ausgelegt ist und die Magnetpole (P1 bis P8) des Stators (St) zumindest über einen Teilbereich der Luftspaltfläche mit der Feinverzahnung (Vz11, Vz12... Vz41, Vz42) versehen sind, und **dadurch gekennzeichnet, dass** die Magnetpole (P1 bis P8) des Stators (St) Polpaare (P1, P3; P2, P4; P5, P7; P6, P8 bzw. P1, P5; P2, P6; P3; P7; P4, P8) bilden, in denen die Feinverzahnungen (Vz11, Vz12...Vz41, Vz42) zumindest in einander entsprechenden Teilumfangsbereichen jeweils gegeneinander versetzt sind.

2. Motor nach Anspruch 1,
**dadurch gekennzeichnet,**
**dass** die Anzahl der Magnetpole (P1 bis P8) des Stators (St) der Anzahl der Dauermagnet-Pole (M1; M8) des Rotors (R) entspricht.

3. Motor nach Anspruch 1 oder 2,
**dadurch gekennzeichnet,**
**dass** der Versatz der Feinverzahnungen (Vz11, Vz12...Vz41, Vz42) der Polpaare (P1, P3; P2, P4; P5, P7; P6, P8; bzw. P1, P5; P2, P6; P3, P7; P4, P8) identisch und vorzugsweise einer halben Teilung der Feinverzahnungen (Vz11, Vz12...Vz41, Vz42) entspricht.

4. Motor nach einem der Ansprüche 1 bis 3,
**dadurch gekennzeichnet,**
**dass** der Stator (St) als Innenstator und der Rotor (R) als Außenrotor ausgebildet sind.

5. Motor nach einem der Ansprüche 1 bis 4,
**dadurch gekennzeichnet,**
**dass** die Dauermagnet-Pole (M1 bis M8) des Rotors (R) durch gleichmäßig über den Umfang des Rotors (R) verteilte Einzel-Dauermagnete gebildet sind, die in Umfangsrichtung abwechselnde Polarität aufweisen.

6. Motor nach Anspruch 5,
**dadurch gekennzeichnet,**
**dass** die Einzel-Dauermagnete einpolig aufmagnetisiert sind.

7. Motor nach einem der Ansprüche 1 bis 4,
**dadurch gekennzeichnet,**
**dass** die Dauermagnet-Pole (M1 bis M8) des Rotors (R) durch eine Anzahl von über den Umfang des Rotors (R) gleichmäßig verteilten zweipoligen Ringsegment-Dauermagneten gebildet sind, die mit ihren Polen in Umfangsrichtung gleichsinnig angeordnet sind.

8. Motor nach Anspruch 7,
**dadurch gekennzeichnet,**
**dass** die Dauermagnet-Pole (M1 bis M8) des Rotors (R) durch mehrpolige Ringsegment-Dauermagnete gebildet sind.

9. Motor nach einem der Ansprüche 1 bis 8,
**dadurch gekennzeichnet,**
**dass** die Feinverzahnungen (Vz11, Vz12...Vz41, Vz42) mäanderförmig ausgebildet sind.

10. Motor nach Anspruch 9,
**dadurch gekennzeichnet,**
**dass** die Zähne (Z) und die Zahnlücken (ZL) der Feinverzahnungen (Vz11, Vz12...Vz41, Vz42) identische Breite und identische Tiefe aufweisen.

11. Motor nach Anspruch 9,
**dadurch gekennzeichnet,**
**dass** die Zähne (Z) und die Zahnlücken (ZL) der Feinverzahnungen (Vz11, Vz12...Vz41, Vz42) unterschiedliche Breiten, jedoch identische Tiefen aufweisen, und sich in den Polpaaren ergänzen.

12. Motor nach Anspruch 9 oder 10,
**dadurch gekennzeichnet,**
**dass** sich die Breite der Zähne (Z) des einen Poles und die Zahnlücken (ZL) des anderen Poles der Polpaare der Feinverzahnungen (Vz11, Vz12...Vz41, Vz42) zumindest in einem Teilumfangsbereich in gleicher Weise verändern.

13. Motor nach einem der Ansprüche 1 bis 12,
**dadurch gekennzeichnet,**
**dass** die Anzahl der Zähne (Z) und Zahnlücken (ZL) der Feinverzahnungen (Vz11, Vz12...Vz41, Vz42) ein ganzzahliges Vielfaches der Anzahl der gebildeten Polpaare beträgt.

14. Motor nach Anspruch 1,
**dadurch gekennzeichnet,**
**dass** die Feinverzahnungen (Vz11, Vz12...Vz41, Vz42) von Polpaaren des Stators (St), die aus jeweils benachbarten oder diametral angeordneten Magnetpolen (P1, P2; P3, P4; P5, P6; P7, P8) gebildet sind, jeweils gegeneinander versetzt sind.

15. Motor nach Anspruch 1,
**dadurch gekennzeichnet,**
**dass** die Feinverzahnungen (Vz11, Vz12...Vz41, Vz42) von Polpaaren des Stators (St), die aus jeweils um zwei Polteilungen versetzten Magnetpolen (P1, P3; P2, P4; P5, P7; P6; P8) gebildet sind, jeweils gegeneinander versetzt sind.

16. Motor nach einem der Ansprüche 1 bis 15,
**dadurch gekennzeichnet,**
**dass** die Tiefe der Zähne (Z) und der Zahnlücken (ZL) etwa gleich oder größer ist als die Luftspaltweite zwischen dem Stator (St) und dem Rotor (R).

## Claims

1. Motor having a stator (St) having a plurality of magnet poles (P1 to P8) and having a rotor (R) with a number of permanent-magnet poles (M1 to M8) matched to a number of poles, in which the air gap surfaces are provided with fine tooth systems (Vz11, Vz12...Vz41, Vz42) in the area between the stator (St) and the rotor (R) in order to reduce the cogging torque, with the pole structure of the stator (St) and rotor (R) being designed to be essentially symmetrical in the circumferential direction, and the magnet poles (P1 to P8) on the stator (St) being provided with the fine tooth system (Vz11, Vz12...Vz41, Vz42) at least over a subarea of the air gap surface, and **characterized in that** the magnet pulse (P1 to P8) of the stator (St) form pole pairs (P1, P3; P2, P4; P5, P7; P6, P8 and P1, P5; P2, P6; P3, P7; P4, P8) in which the fine tooth systems (Vz11, Vz12...Vz41, Vz42) are each offset with respect to one another, at least in mutually corresponding circumferential area elements.

2. Motor according to Claim 1, **characterized in that** the number of magnet poles (P1 to P8) on the stator (St) corresponds to the number of permanent-magnet poles (M1; M8) on the rotor (R).

3. Motor according to Claim 1 or 2, **characterized in that** the offset of the fine tooth systems (Vz11, Vz12...Vz41, Vz42) on the pole pairs (P1, P3; P2, P4; P5, P7; P6, P8 and P1, P5; P2, P6; P3, P7; P4, P8) is identical and preferably corresponds to half the pitch of the fine tooth systems (Vz11, Vz12...Vz41, Vz42).

4. Motor according to one of Claims 1 to 3, **characterized in that** the stator (St) is in the form of an internal stator, and the rotor (R) is in the form of an external rotor.

5. Motor according to one of Claims 1 to 4, **characterized in that** the permanent-magnet poles (M1 to M8) of the rotor (R) are formed by individual permanent magnets which are distributed uniformly over the circumference of the rotor (R) and have alternating polarity in the circumferential direction.

6. Motor according to Claim 5, **characterized in that** the individual permanent magnets are magnetized on a single-pole basis.

7. Motor according to one of Claims 1 to 4, **characterized in that** the permanent-magnet poles (M1 to M8) of the rotor (R) are formed by a number of two-pole annular segment permanent magnets which are distributed uniformly over the circumference of the rotor (R) and are arranged with their poles in the same sense in the circumferential direction.

8. Motor according to Claim 7, **characterized in that** the permanent-magnet poles (M1 to M8) on the rotor (R) are formed by multipole annular segment permanent magnets.

9. Motor according to one of Claims 1 to 8, **characterized in that** the fine tooth systems (Vz11, Vz12...Vz41, Vz42) are formed in a meandering shape.

10. Motor according to Claim 9, **characterized in that** the teeth (Z) and the tooth gaps (ZL) of the fine tooth system (Vz11, Vz12... Vz41, Vz42) have an identical width and an identical depth.

11. Motor according to Claim 9, **characterized in that** the teeth (Z) and the tooth gaps (ZL) of the fine tooth system (Vz11, Vz12...Vz41, Vz42) have different widths, but have identical depths, and complement one another in the pole pairs.

12. Motor according to Claim 9 or 10, **characterized in that** the width of the teeth (Z) of one pole and the tooth gaps (ZL) of the other pole in the pole pairs of the fine tooth systems (Vz11, Vz12...Vz41, Vz42) change in the same manner at least in one circumferential area element.

13. Motor according to one of Claims 1 to 12, **characterized in that** the number of teeth (Z) and tooth gaps (ZL) of the fine tooth system (Vz11, Vz12...Vz41, Vz42) is an integer multiple of the number of pole pairs that are formed.

14. Motor according to Claim 1, **characterized in that** the fine tooth system (Vz11, Vz12...Vz41, Vz42) of pole pairs of the stator (St) which are formed from respectively adjacent or diametrically oppositely arranged magnet poles (P1, P2; P3, P4; P5, P6; P7, P8) in each case offset with respect to one another.

15. Motor according to Claim 1, **characterized in that** the fine tooth systems (Vz11, Vz12...Vz41, Vz42) of pole pairs on the stator (St) which are formed from magnet poles (P1, P3; P2, P4; P5, P7; P6; P8) which are in each case offset by two pole pitches are in each case offset with respect to one another.

16. Motor according to one of Claims 1 to 15, **characterized in that** the depth of the teeth (Z) and of the tooth gaps (ZL) is approximately the same or is greater than the width of the air gap between the stator (St) and the rotor (R).

## Revendications

1. Moteur comprenant un stator (St) muni de plusieurs pôles magnétiques (P1 à P8) et un rotor (R) possédant un nombre correspondant de pôles à aimant permanent (M1 à M8) dont les surfaces d'entrefer dans la zone entre le stator (ST) et le rotor (R) sont pourvues pour la réduction du couple de blocage, de fines dentures (Vz11, Vz12...Vz41, Vz42), la structure de pôle du stator (St) et du rotor (R) dans la direction périphérique étant pour l'essentiel symétrique et les pôles magnétiques (P1 à P8) du stator (St) étant pourvus, au moins sur une zone partielle de la surface d'entrefer, de la fine denture (Vz11, Vz12...Vz41, Vz42),
**caractérisé en ce que**
les pôles magnétiques (P1 à P8) du stator (St) forment des paires de pôles (P1, P3 ; P2, P4 ; P5, P7 ; P6, P8 ou P1, P5 ; P2, P6 ; P3, P7 ; P4, P8), dans lesquelles les fines dentures (Vz11, Vz12... Vz41, Vz42) sont décalées respectivement les unes par rapport aux autres au moins dans des zones périphériques partielles correspondant les unes aux autres.

2. Moteur selon la revendication 1,
**caractérisé en ce que**
le nombre de pôles magnétiques (P1 à P8) du stator (St) correspond au nombre de pôles à aimant permanent (M1 ; M8) du rotor (R).

3. Moteur selon la revendication 1 ou 2,
**caractérisé en ce que**
le décalage des fines dentures (Vz11, Vz12... Vz41, Vz42) des paires de pôles (P1, P3 ; P2, P4 ; P5, P7 ; P6, P8 ou P1, P5 ; P2, P6 ; P3, P7 ; P4, P8) est identique et correspond de préférence à un demi pas des fines dentures (Vz11, Vz12... Vz41, Vz42).

4. Moteur selon l'une des revendications 1 à 3,
**caractérisé en ce que**
le stator (St) est un stator intérieur et le rotor (R) est un rotor extérieur.

5. Moteur selon l'une des revendications 1 à 4,
**caractérisé en ce que**
les pôles à aimant permanent (M1 à M8) du rotor (R) sont formés par des aimants permanents individuels uniformément répartis sur la périphérie du rotor (R), et présentant dans la direction périphérique une polarité alternée.

6. Moteur selon la revendication 5,
**caractérisé en ce que**
les aimants permanents individuels sont magnétisés de façon unipolaire.

7. Moteur selon l'une des revendications 1 à 4,
**caractérisé en ce que**
les pôles à aimant permanent (M1 à M8) du rotor (R) sont formés par un certain nombre d'aimants permanents à segment annulaire bipolaires répartis sur la périphérie du rotor (R), avec leurs pôles dans le même sens dans la direction périphérique.

8. Moteur selon la revendication 7,
**caractérisé en ce que**
les pôles à aimant permanent (M1 à M8) du rotor (R) sont formés par des aimants permanents à segment annulaire multipolaires.

9. Moteur selon l'une des revendications 1 à 8,
**caractérisé en ce que**
les fines dentures (Vz11, Vz12... Vz41, Vz42) sont en forme de méandre.

10. Moteur selon la revendication 9,
**caractérisé en ce que**
les dents (Z) et les espaces entre dents (ZL) des fines dentures (Vz11, Vz12... Vz41, Vz42) ont une largeur et une profondeur identiques.

11. Moteur selon la revendication 9,
**caractérisé en ce que**
les dents (Z) et les espaces entre dents (ZL) des fines dentures (Vz11, Vz12... Vz41, Vz42) ont des largeurs différentes mais des profondeurs identiques, et se complètent dans les paires de pôles.

12. Moteur selon la revendication 9 ou 10,
**caractérisé en ce que**
la largeur des dents (Z) du premier pôle et les espaces entre dents (ZL) de l'autre pôle des paires de pôles des fines dentures (Vz11, Vz12... Vz41, Vz42) varient de la même manière au moins dans une zone périphérique partielle.

13. Moteur selon l'une des revendications 1 à 12,
**caractérisé en ce que**
le nombre de dents (Z) et d'espaces entre dents (ZL) des fines dentures (Vz11, Vz12... Vz41, Vz42) correspond à un nombre entier de fois le nombre des paires de pôles formées.

14. Moteur selon la revendication 1,
**caractérisé en ce que**
les fines dentures (Vz11, Vz12... Vz41, Vz42) de paires de pôles du stator (St), formées à partir de pôles magnétiques respectivement voisins ou diamétralement opposés (P1, P2 ; P3, P4 ; P5, P6 ; P7, P8), sont respectivement décalées les unes par rapport aux autres.

15. Moteur selon la revendication 1,
**caractérisé en ce que**
les fines dentures (Vz11, Vz12... Vz41, Vz42) de paires de pôles du stator (St), formées à partir de pôles magnétiques respectivement décalés de deux pas de pôle (P1, P3 ; P2, P4 ; P5, P7 ; P6, P8), sont respectivement décalées les unes par rapport aux autres.

16. Moteur selon l'une des revendications 1 à 15,
**caractérisé en ce que**
la profondeur des dents (Z) et des espaces entre dents (ZL) est approximativement égale ou supérieure à la largeur de l'entrefer entre le stator (St) et le rotor (R).
